# EUROPEAN PATENT APPLICATION

(11) **EP 4 190 859 A1**
(43) Date of publication of application: **07.06.2023**
(21) Application number: 21211774.1
(22) Date of filing: 01.12.2021
(51) Int. Cl.: C08L 23/16

(54) **TRANSPARENT AND SCRATCH RESISTANT THERMOPLASTIC COMPOSITIONS HAVING IMPROVED BARRIER PROPERTIES**

(71) Applicant: SHPP Global Technologies B.V., 4612 PX Bergen op Zoom (NL)
(72) Inventor: LUGGER, Jody Ann Martin, Bergen op Zoom (NL); DE BROUWER, Johannes, Bergen op Zoom (NL); WIRTZ, Remco, Bergen op Zoom (NL)
(74) Representative: Dehns

(57) **Abstract**

Thermoplastic compositions include: from about 5 wt% to about 94 wt% of at least one cyclic olefin copolymer (COC); from about 5 wt% to about 94 wt% of at least one cyclic olefin polymer (COP); and from about 1 wt% to about 45 wt% glass filler. The glass filler has a refractive index (RI) that (a) matches the RI of the at least one COC, (b) matches the RI of the at least one COP, or (c) is between the RI of the at least one COC and the at least one COP.

## Description

### FIELD OF THE DISCLOSURE

The present disclosure relates to glass-filled thermoplastic compositions including at least one cyclic olefin copolymer (COC) and at least one cyclic olefin polymer (COP); the compositions have improved transmission and haze properties.

### BACKGROUND OF THE DISCLOSURE

Plastic containers used in medical applications to store drugs, chemicals or reagents require a combination of properties, which includes high transparency, resistance to scratch, barrier to atmospheric contaminants including oxygen and water and breakage resistance. While glass has many of these material properties, it breaks easily and cannot be shaped as easily as other materials, limiting its design freedom. In addition, dimensional variability can result in unacceptable drug dosing variations.

Currently glass is used for the vast majority of primary drug packaging including pre-filled syringes (PFSs), cartridges, ampoules and vials. Glass shatters easily, which is a problem during transport and for the end user. It is a particular problem when glass syringes are placed in auto injectors, where the force of the spring can cause the syringe to shatter. It also limits the suitability of glass syringes for very viscous or large volume injections, which also require larger forces. Glass syringes need to be lubricated (e.g., with a coating) to reduce friction of the plunger stopper as it moves along the glass barrel. Siliconization can address this problem, but can cause issues with some drugs. In addition, there is a limited amount of silicone that patients can be safely exposed to. This has been partially addressed by only siliconizing the rubber stopper, or spraying the barrel internally, but in both cases lubrication may not be sufficient.

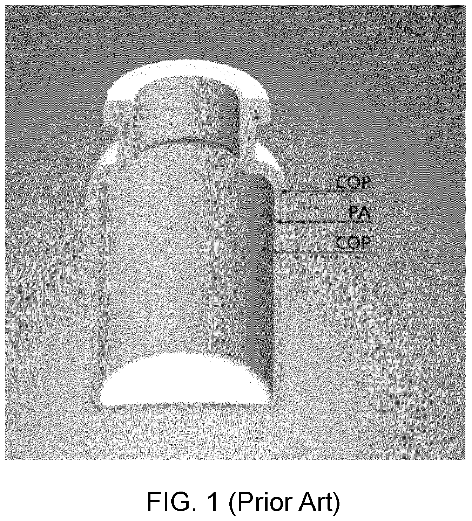

Many plastic containers used in medical applications are made using one or more layer of film-containing cyclic olefin copolymers (COCs) or cyclic olefin polymers (COPs). COC/COP provide reasonably good barrier properties. When a plastic container uses a single layer of COC/COP, however, the barrier properties are not sufficient for the majority of applications. Most notably, for example, oxygen passes through at a rate that is not acceptable. In order to improve barrier properties and strength, a multi-layer approach is adopted, as illustrated in FIG. 1. The middle layer can be a second polymer such as polyamide (PA) or polyvinyl alcohol (PVA). The middle layer provides the strength and/or enhances the barrier properties, while the COC/COP layer provides the biocompatibility with the medical products (*e.g*. drugs, reagents, etc.). While the multilayer approach improves the barrier properties and the resistance to breakage, it is an expensive solution and is difficult to manufacture. In addition, COC/COP are not scratch resistant. In drug delivery applications, automated optical inspection may mistake small scratches on the outside for particulate contaminations on the inside, disqualifying the particular product resulting in a reduced yield.

Accordingly, there is a need for plastic containers made using a single layer/material, to reduce manufacturing cost and increase design flexibility, with a combination of properties including high transparency, scratch resistance, barrier to atmospheric contaminants and breakage resistance.

These and other shortcomings are addressed by aspects of the disclosure.

### SUMMARY

Aspects of the disclosure relate to thermoplastic compositions including: from about 5 wt% to about 94 wt% of at least one cyclic olefin copolymer (COC); from about 5 wt% to about 94 wt% of at least one cyclic olefin polymer (COP); and from about 1 wt% to about 45 wt% glass filler. The glass filler has a refractive index (RI) that (a) matches the RI of the at least one COC, (b) matches the RI of the at least one COP, or (c) is between the RI of the at least one COC and the at least one COP. The glass filler may include glass fiber, and in particular glass flakes having a high aspect ratio.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIG. 1 is a cross section of a conventional multilayer polymeric drug delivery container.
FIG. 2 is a graph showing WVTR as a function of glass loading for various polymers used in aspects of the disclosure.
FIGS. 3A and 3B are graphs showing haze as a function of COP content for compositions according to aspects of the disclosure.
FIGS. 4A and 4B are graphs showing transmission as a function of COP content for compositions according to aspects of the disclosure.

### DETAILED DESCRIPTION

The present disclosure relates to a thermoplastic material composition for manufacturing transparent, scratch resistant and strong plastic containers with enhanced barrier performance for water vapor. The disclosure can be understood more readily by reference to the following detailed description of the disclosure and the Examples included therein. In various aspects, the present disclosure pertains to thermoplastic compositions including: from about 5 wt% to about 94 wt% of at least one cyclic olefin copolymer (COC); from about 5 wt% to about 94 wt% of at least one cyclic olefin polymer (COP); and from about 1 wt% to about 45 wt% glass filler. The glass filler has a refractive index (RI) that (a) matches the RI of the at least one COC, (b) matches the RI of the at least one COP, or (c) is between the RI of the at least one COC and the at least one COP. The glass filler may include glass fiber, and in particular aspects glass flakes. In an aspect, the thermoplastic compositions exhibit improved optical properties, including transmission and haze.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a glass filler" includes mixtures of two or more glass filler materials.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure include a thermoplastic composition including: from about 5 wt% to about 94 wt% of at least one cyclic olefin copolymer (COC); from about 5 wt% to about 94 wt% of at least one cyclic olefin polymer (COP); and from about 1 wt% to about 45 wt% glass filler. The glass filler has a refractive index (RI) that (a) matches the RI of the at least one COC, (b) matches the RI of the at least one COP, or (c) is between the RI of the at least one COC and the at least one COP.

As used herein, a "cyclic olefin copolymer" (COC) or "cyclic olefin polymer" (COP) refers to an amorphous polymer, cyclo-olefine copolymer, cyclic olefin polymer, or ethylene-norbornene copolymer. COPs include a single type of monomer; COCs use different types of monomers. The disclosure relates to cyclic olefin copolymers based on different types of cyclic monomers and polymerization methods. The COCs and COPs of the present disclosure may be produced by chain copolymerization of cyclic monomers such as 8,9,10-trinorborn-2-ene (norbornene) or 1,2,3,4,4a,5,8,8a-octahydro-1,4:5,8-dimethanonaphthalene with ethene, Topas^{®} (by TOPAS Advanced Polymers), APEL^{™} (by Mitsui Chemical), or by ring-opening metathesis polymerization of various cyclic monomers followed by hydrogenation (for example Japan Synthetic Rubber's ARTON or Zeon Chemical's Zeonex and Zeonor).

In some aspects the composition includes at least two COC polymers, at least two COP polymers, or at least two COC polymers and at least two COP polymers.

The glass filler may include glass fiber, including but not limited to glass flake. The glass fiber may be sized (e.g., coated). Exemplary sizings include, but are not limited to, amine, acrylate, alkene and epoxy-based coatings. Sizings can function to induce compatibility between the glass fiber and the thermoplastic resin, minimizing the formation of a gas interface between polymer and glass. Suitable glass fiber types include, but are not limited to, C-type glass fibers and E-type glass fibers. In a specific aspect the glass fiber includes C-type glass flakes. The type, size and sizing of the glass filler may be selected according to the desired properties (e.g., RI) of the composition.

The composition may further include at least one additional additive in some aspects. In certain aspects the at least one additional additive includes a polymer that is soluble in either or both of the at least one COC and the at least one COP. In a specific aspect the at least one additive includes an amorphous or semi-crystalline polymer.

In further aspects the at least one additional additive includes an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

The COC, COP and glass filler may be selected so that they have a refractive index (RI) as close to each other as possible so as to provide the composition with good transmission and haze values. In one aspect the RI of the at least one COP is a different value than the RI of the at least one COC. In other aspects the at least one COC has a refractive index of from about 1.50 to about 1.55, and the at least one COP has a refractive index of from about 1.50 to about 1.55. In specific aspects the glass filler has a RI that is between the RI of the at least one COC and the at least one COP.

Compositions according to some aspects of the disclosure have a haze of less than 20% as tested in accordance with ASTM D1003 on a sample having a thickness of at least 0.8 millimeters (mm). In further aspects the composition has a transmission of at least 85% as tested in accordance with ASTM D1003 on a sample having a thickness of at least 0.8 mm. In certain aspects the compositions have a haze of less than 20% and a transmission of at least 85% as tested in accordance with ASTM D1003 on a sample having a thickness of at least 1.0 mm, or at least 1.5 mm, or at least 2.0 mm, or at least 2.5 mm, or from 0.8 mm to 5.0 mm, or from 0.8 mm to 4.0 mm, or from 0.8 mm to 3.0 mm, or from 1.0 mm to 5.0 mm, or from 1.0 mm to 4.0 mm, or from 1.0 mm to 3.0 mm, or from 1.5 mm to 5.0 mm, or from 1.5 mm to 4.0 mm, or from 1.5 mm to 3.0 mm, or from 1.5 mm to 2.5 mm.

The compositions described herein may also have improved water vapor transmission rate (WVTR) as compared to conventional compositions. In some aspects the composition has a WVTR as tested in accordance with ISO 15106-3 that is 50% or less than that of a comparative composition that does not include the glass filler. The compositions described herein may also have improved oxygen transmission rate (OTR) as tested in accordance with ASTM F1927 as compared to conventional compositions. In some aspects the composition has an OTR as tested in accordance with ASTM F1927 that is 50% or less than that of a comparative composition that does not include the glass filler.

The addition of glass filler (e.g., glass flakes) with high barrier properties improves the barrier properties of the overall thermoplastic composition and objects made therefrom. With diffusion through the filler particles approaching zero, humidity, moisture and/or oxygen will need to diffuse through the plastic around the filler particles to reach the other side of the article including the composition. This increases the path length and greatly reduces the overall migration from one side of the object to the other. This works best when the flake like particles have a high aspect ratio, i.e., when they are relatively large in two dimensions while thin in the third dimension. In general, filled materials have reduced light transmittance due to scattering, reflection and absorption of the light by the filler particles. Even when the filler is transparent to light, scattering may occur which prevents the contents of a vial from such material to be inspected visually or with a camera system. High transparency may be attained when the particles are sufficiently small relative to the wavelength of light or have the same refractive index as the plastic material in which they are embedded. As extremely small particles provide no substantial improvement in barrier properties, it may be desirable to match the refractive index of the plastic to that of the glass flakes particles.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In specific aspects the article is a plastic container for use in medical applications. In a further aspect, the article is extrusion molded. In a still further aspect, the article is injection molded.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A thermoplastic composition comprising:
   from about 5 wt% to about 94 wt% of at least one cyclic olefin copolymer (COC);
   from about 5 wt% to about 94 wt% of at least one cyclic olefin polymer (COP); and
   from about 1 wt% to about 45 wt% glass filler,
   wherein the glass filler has a refractive index (RI) that (a) matches the RI of the at least one COC, (b) matches the RI of the at least one COP, or (c) is between the RI of the at least one COC and the at least one COP.
Aspect 2. The thermoplastic composition according to Aspect 1, wherein the composition has a haze of less than 20% as tested in accordance with ASTM D1003 on a sample having a thickness of at least 0.8 mm.
Aspect 3. The thermoplastic composition according to Aspect 1 or 2, wherein the composition has a transmission of at least 85% as tested in accordance with ASTM D1003 on a sample having a thickness of at least 0.8 mm.
Aspect 4. The thermoplastic composition according to any of Aspects 1 to 3, wherein the glass filler comprises glass flakes.
Aspect 5. The thermoplastic composition according to any of Aspects 1 to 4, wherein the glass filler comprises C-type glass fibers.
Aspect 6. The thermoplastic composition according to any of Aspects 1 to 5, wherein the composition has a water vapor transmission rate (WVTR) as tested in accordance with ISO 15106-3 that is 50% or less than that of a comparative composition that does not include the glass filler.
Aspect 7. The thermoplastic composition according to any of Aspects 1 to 6, wherein the RI of the at least one COP is a different value than the RI of the at least one COC.
Aspect 8. The thermoplastic composition according to Aspect 7, wherein the glass filler has a RI that is between the RI of the at least one COC and the at least one COP.
Aspect 9. The thermoplastic composition according to any of Aspects 1 to 8, wherein the at least one COC has a refractive index of from about 1.50 to about 1.55, and the at least one COP has a refractive index of from about 1.50 to about 1.55.
Aspect 10. The thermoplastic composition according to any of Aspects 1 to 9, wherein the composition comprises at least two COC polymers, at least two COP polymers, or at least two COC polymers and at least two COP polymers.
Aspect 11. The thermoplastic composition according to any of Aspects 1 to 10, wherein the composition comprises at least one additional additive.
Aspect 12. The thermoplastic composition according to Aspect 11, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof
Aspect 13. The thermoplastic composition according to Aspect 12, wherein the at least one additional additive comprises a polymer that is soluble in either or both of the at least one COC and the at least one COP.
Aspect 14. The thermoplastic composition according to any of Aspects 11 to 13, wherein the at least one additive comprises an amorphous or semi-crystalline polymer.
Aspect 15. An article comprising the thermoplastic composition according to any of Aspects 1 to 14.
Aspect 16. The article according to Aspect 15, wherein the article is a plastic container for use in medical applications.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Example 1 - WVTR Properties

Glass flake filled COP and COC compounds were prepared as follows: A preheated, 280 °C, twin-screw extruder (25 mm diam, ZSK25) was continuously run with either COC (Topas^{®} 6017s) or COP (ZEONEX^{®} 790R) thermoplastics at a rate of 4-5 kg/hour. Glass flake powder was fed before the screw's mixing zone using a side feeder at a rate of 0.55-1.7 kg/hour, providing 10-30 wt% glass-filled compounds. The extrudate strand was fed through a water bad to expedite cooling, before being pelletized using a chopper; offering 2 kg batches.

Articles were prepared for testing according to the following: the thermoplastic pellets were pre-dried at 100 °C for 5 hours. The injection molding machine, Engel, was thoroughly rinsed with either neat COC or COP resins, using a temperature gradient at the start of the screw from 295 °C to 310 °C at the nozzle, prior to feeding the glass-filled compound. The articles, rectangular plaques of 10.0 x 10.0 x 0.8 cm, were injection molded using a backpressure of 5 Bar, a holding pressure of 25 Bar, an injection pressure of 170 Bar, with a total cycle time of 30 seconds. The collected articles were individually packed for protection.

Glass flake characteristics: three different flake thicknesses of C-type glass flakes were used: 350, 500, and 700 nm. The longitudinal size was 30 µm for the 350 nm thick flakes (having an aspect ratio of 86), while the longitudinal size for the 500 and 700 nm thick flakes was 160 µm, affording respective aspect ratios of 320 and 217. Where E-type glass flakes were used the flakes had a thickness of 1 µm and a longitudinal size of 30 µm, providing an aspect ratio of 30. Different sizings were applied on the flakes to induce compatibility with the thermoplastic resin, minimizing the formation of a gas interface between polymer and glass. A glass composition having a refractive index of 1.52 was chosen so that it closely matches with the refractive indexes of the neat COC and COP resins; this allowed the compositions to retain a high light transmission and a low haze through the glass-filled compounds.

Water-vapor transmission rate (WVTR) was tested in accordance with ISO 15106-3. Results of the WVTR testing are provided in Tables 1A and 1B:

**Table 1A - WVTR Properties (Part 1)**

| **Sample** | **Compound** | **Base resin** | **Loading (wt%)** | **Remarks** |
|---|---|---|---|---|
| **1.1** | TOPAS^{®} 6017s | COC | 0 | Neat |
| **1.2** | TOPAS^{®} 6017s | COC | 0 | Compounded |
| **1.3** | 5 wt% amine coating (AM) | COC | 5 | Compounded |
| **1.4** | 5 wt% acrylate coating (ACR) | COC | 5 | Compounded |
| **1.5** | 5 wt% alkene coating (AKE) | COC | 5 | Compounded |
| **1.6** | 5 wt% epoxy coating (EPO) | COC | 5 | Compounded |
| **1.7** | 10 wt% nano AKE | COC | 10 | Compounded |
| **1.8** | 20 wt% nano AKE | COC | 20 | Compounded |
| **1.9** | 30 wt% nano AKE | COC | 30 | Compounded |
| **1.10** | 20 wt% nano AKE | COC | 20 | Compounded |
| **1.11** | 20 wt% nano AKE | COC | 20 | Compounded |
| **1.12** | 20 wt% nano EPO | COC | 20 | Compounded |
| **1.13** | 20 wt% nano EPO | COC | 20 | Compounded |
| **1.14** | Zeonex^{®} 790R | COP | 0 | Compounded |
| **1.15** | 30 wt% AKE | COP | 30 | Compounded |
| **1.16** | 30 wt% EPO | COP | 30 | Compounded |
| **1.17** | 20 wt% nano AKE | COP | 20 | Compounded |
| **1.18** | 20 wt% nano EPO | COP | 20 | Compounded |

**Table 1B - WVTR Properties (Part 2)**

| **Sample** | **Flake width (µm)** | **Flake thickness (nm)** | **Flake aspect ratio** | **WVTR (g/m²/d)** | **Improvement factor** |
|---|---|---|---|---|---|
| **1.1** | - | - | - | 0.08 | - |
| **1.2** | - | - | - | 0.085 | - |
| **1.3** | 30 | 1150 | 26 | 0.075 | 1.1 |
| **1.4** | 30 | 1150 | 26 | 0.07 | 1.2 |
| **1.5** | 30 | 1150 | 26 | 0.09 | 0.9 |
| **1.6** | 30 | 1150 | 26 | 0.09 | 0.9 |
| **1.7** | 160 | 500 | 320 | 0.0515 | 1.7 |
| **1.8** | 160 | 500 | 320 | 0.033 | 2.6 |
| **1.9** | 160 | 500 | 320 | 0.021 | 4.0 |
| **1.10** | 160 | 750 | 213 | 0.051 | 1.7 |
| **1.11** | 30 | 350 | 86 | 0.041 | 2.1 |
| **1.12** | 160 | 750 | 213 | 0.032 | 2.7 |
| 1**.13** | 160 | 500 | 320 | 0.041 | 2.1 |
| **1.14** | - | - | - | 0.0345 | - |
| **1.15** | 30 | 1150 | 26 | 0.029 | 1.2 |
| **1.16** | 30 | 1150 | 26 | 0.029 | 1.2 |
| **1.17** | 160 | 500 | 320 | 0.023 | 1.5 |
| **1.18** | 160 | 500 | 320 | 0.026 | 1.3 |

The glass-filled compositions in Table 1A included either TOPAS^{®} 6017s (COC, Samples 1.3-1.13) or Zeonex^{®} 790R (COP, Samples 1.15-1.18).

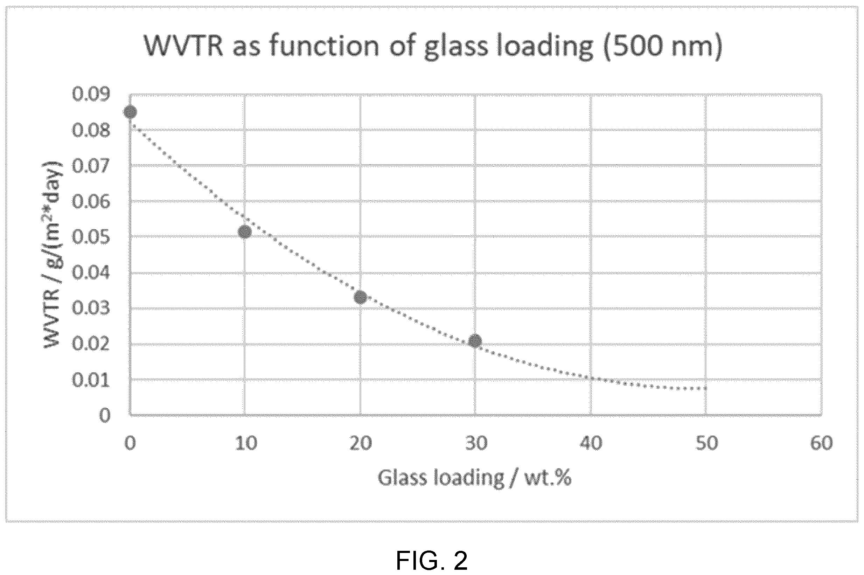

As shown in Table 1B, a 4-fold improvement in WVTR was observed in sample 1.9 (a 30 wt.% glass-flake filled COC compound) as compared to the compounded unfilled COC compound (sample 1.2). As illustrated in FIG. 2, the WVTR is a function of filler loading, with the WVTR improving when the filler content is increased.

### Example 2 - Light Transmission and Haze Properties

Compositions including COC or COP and several types of glass flakes (C-type and E-type) were formed and tested for optical properties (transmission and haze). The compositions and their properties are shown in Tables 2A and 2B:

**Table 2A - Compositions Including COC or COP and C-type Glass Flakes**

| **Component (wt%)** | **2.1** | **2.2** | **2.3** | **2.4** | **2.5** | **2.6** | **2.7** | **2.8** | **2.9** |
|---|---|---|---|---|---|---|---|---|---|
| TOPAS^{®} 6017s (COC) | 90 | 80 | 70 | 80 | 80 | 80 | 80 | | |
| Zeonex^{®} 790R (COP) | | | | | | | | 80 | 80 |
| Glass flakes 350 nm (AKE) | | | | | 20 | | | | |
| Glass flakes 500 nm (AKE) | 10 | 20 | 30 | | | | | 20 | |
| Glass flakes 750 nm (AKE) | | | | 20 | | | | | |
| Glass flakes 500 nm (EPO) | | | | | | | 20 | | 20 |
| Glass flakes 750 nm (EPO) | | | | | | 20 | | | |
| | | | | | | | | | |
| **Properties** | | | | | | | | | |
| Transmission (%) (1.5 mm) | 90 | 87 | 83 | 85 | 84 | 85 | 87 | 88 | 89 |
| Haze (%) (1.5 mm) | 20 | 44 | 65 | 47 | 59 | 45 | 44 | 24 | 26 |

**Table 2B - Compositions Including COC/E-type Glass Flakes**

| **Component (wt%)** | **3.1** | **3.2** | **3.3** | **3.4** | **3.5** | **3.6** |
|---|---|---|---|---|---|---|
| TOPAS^{®} 6017s (COC) | 100 | 100 | 95 | 95 | 95 | 95 |
| Glass flakes 1000 nm (AM) | | | 5 | | | |
| Glass flakes 1000 nm (ACR) | | | | 5 | | |
| Glass flakes 1000 nm (AKE) | | | | | 5 | |
| Glass flakes 1000 nm (EPO) | | | | | | 5 |
| | | | | | | |
| **Properties** | | | | | | |
| Transmission (%) (2.0 mm) | 93 | 93 | 88 | 88 | 88 | 89 |
| Haze (%) (2.0 mm) | 2 | 1 | 68 | 63 | 69 | 65 |

From the data it is observed that a high transmission (83% or higher) was obtained for all of the prepared compounds. Haze was generally poor (>20%) for all compositions, although when the refractive index (RI) of the resin (COC RI = 1.53; COP RI = 1.52) was closely matched with that of C-type glass flakes (RI = 1.52) (Table 2A), haze could be reduced significantly. See, e.g., compositions C2.8 and C2.9 compared to the corresponding COC-based samples 2.2 and 2.7. In contrast, the COC/E-type glass compositions (RI = 1.56) had substantially higher haze values although they only included 5 wt% glass flakes. Compare Table 2B, compositions 3.3-3.6 to the compositions in Table 2A. Accordingly, C-type glass flakes provided improved haze properties compared to E-type glass flakes, even compositions including the C-type glass flakes could not achieve haze values below 20% when only one of COC or COP were used.

### Example 3 - Light Transmission and Haze of Blended COC/COP Compositions

Compositions including a blend of COP and COC and C-type glass flakes were prepared and their optical properties tested as shown in Tables 3A and 3B:

**Table 3A - Blended COC/COP Compositions**

| **Component (wt%)** | **4.1** | **4.2** | **4.3** | **4.4** | **4.5** | **4.6** | **4.7** |
|---|---|---|---|---|---|---|---|
| Zeonex^{®} 690R (COP) | 90 | 72 | 58.5 | 45 | 31.5 | 18 | |
| Zeonor^{®} 1020R (COP) | | 18 | 31.5 | 45 | 58.5 | 72 | 90 |
| TOPAS^{®} 6015S (COC) | | | | | | | |
| 350 nm unmilled AKE (C-type glass flakes) | 10 | 10 | 10 | 10 | 10 | 10 | 10 |
| | | | | | | | |
| **Properties** | | | | | | | |
| Transmission (%) (0.8 mm) | 88.6 | 88.9 | 89.2 | 89.2 | 89.2 | 89.3 | 89.3 |
| Haze (%) (0.8 mm) | 33.1 | 26.1 | 21.7 | 19.3 | 17.3 | 15.2 | 13 |

**Table 3B - Blended COC/COP Compositions (cont.)**

| **Component (wt%)** | **4.8** | **4.9** | **4.10** | **4.11** | **4.12** | **4.13** |
|---|---|---|---|---|---|---|
| Zeonex^{®} 690R (COP) | | | | | | |
| Zeonor^{®} 1020R (COP) | 72 | 58.5 | 45 | 31.5 | 18 | |
| TOPAS^{®} 6015S (COC) | 18 | 31.5 | 45 | 58.5 | 72 | 90 |
| 350 nm unmilled AKE (C-type glass flakes) | 10 | 10 | 10 | 10 | 10 | 10 |
| | | | | | | |
| **Properties** | | | | | | |
| Transmission (%) (0.8 mm) | 88.8 | 88.5 | 88.4 | 88.7 | 89 | 88.8 |
| Haze (%) (0.8 mm) | 15.5 | 18.9 | 21.1 | 24.2 | 25.5 | 31.7 |

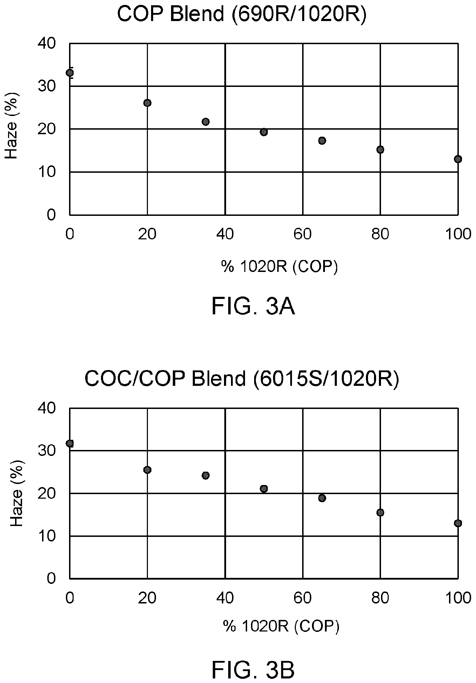

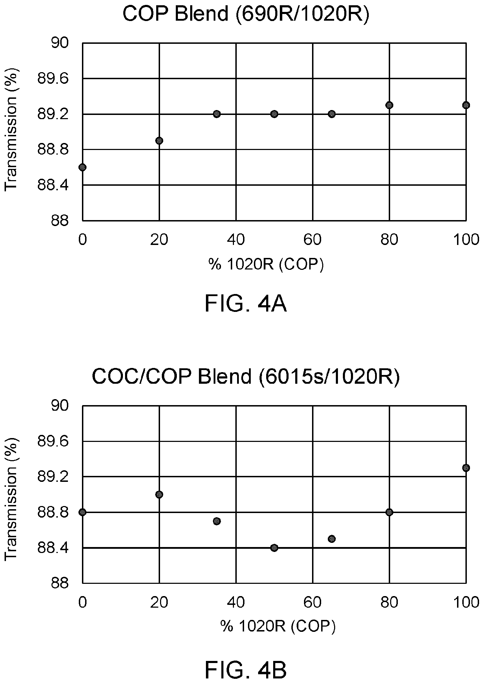

From the data, it was observed that compositions including a blend of both COC and COP had improved haze (lower) and transmission (higher) values. The improvement in haze and transmission properties can be seen visually in FIGS. 3A, 3B, 4A and 4B.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
from about 5 wt% to about 94 wt% of at least one cyclic olefin copolymer (COC);
from about 5 wt% to about 94 wt% of at least one cyclic olefin polymer (COP); and
from about 1 wt% to about 45 wt% glass filler,
wherein the glass filler has a refractive index (RI) that (a) matches the RI of the at least one COC, (b) matches the RI of the at least one COP, or (c) is between the RI of the at least one COC and the at least one COP.

2. The thermoplastic composition according to claim 1, wherein the composition has a haze of less than 20% as tested in accordance with ASTM D1003 on a sample having a thickness of at least 0.8 millimeters (mm).

3. The thermoplastic composition according to claim 1 or 2, wherein the composition has a transmission of at least 85% as tested in accordance with ASTM D1003 on a sample having a thickness of at least 0.8 mm.

4. The thermoplastic composition according to any of claims 1 to 3, wherein the glass filler comprises glass flakes.

5. The thermoplastic composition according to any of claims 1 to 4, wherein the glass filler comprises C-type glass fibers.

6. The thermoplastic composition according to any of claims 1 to 5, wherein the composition has a water vapor transmission rate (WVTR) as tested in accordance with ISO 15106-3 that is 50% or less than that of a comparative composition that does not include the glass filler.

7. The thermoplastic composition according to any of claims 1 to 6, wherein the RI of the at least one COP is a different value than the RI of the at least one COC.

8. The thermoplastic composition according to claim 7, wherein the glass filler has a RI that is between the RI of the at least one COC and the at least one COP.

9. The thermoplastic composition according to any of claims 1 to 8, wherein the at least one COC has a refractive index of from about 1.50 to about 1.55, and the at least one COP has a refractive index of from about 1.50 to about 1.55.

10. The thermoplastic composition according to any of claims 1 to 9, wherein the composition comprises at least two COC polymers, at least two COP polymers, or at least two COC polymers and at least two COP polymers.

11. The thermoplastic composition according to any of claims 1 to 10, wherein the composition comprises at least one additional additive.

12. The thermoplastic composition according to claim 11, wherein the at least one additional additive comprises a polymer that is soluble in either or both of the at least one COC and the at least one COP.

13. The thermoplastic composition according to claim 11 or 12, wherein the at least one additive comprises an amorphous or semi-crystalline polymer.

14. An article comprising the thermoplastic composition according to any of claims 1 to 13.

15. The article according to claim 15, wherein the article is a plastic container for use in medical applications.
